Europäisches Patentamt

(19) European Patent Office

Office européen des brevets

(11) Veröffentlichungsnummer : **0 091 704**
**B1**

(12) # EUROPÄISCHE PATENTSCHRIFT

(45) Veröffentlichungstag der Patentschrift :
18.06.86

(51) Int. Cl.⁴ : **C 04 B 35/04**

(21) Anmeldenummer : 83200420.4

(22) Anmeldetag : 25.03.83

(54) **Verfahren zur Herstellung von feuerfesten Magnesiachromerzeugnissen.**

(30) Priorität : 08.04.82 AT 1410/82

(43) Veröffentlichungstag der Anmeldung :
19.10.83 Patentblatt 83/42

(45) Bekanntmachung des Hinweises auf die Patenterteilung : 18.06.86 Patentblatt 86/25

(84) Benannte Vertragsstaaten :
DE FR GB IT NL

(56) Entgegenhaltungen :
AT-B- 353 154
DE-A- 1 571 638
DE-A- 2 011 805
DE-A- 2 015 566
FR-A- 2 201 267
GB-A- 2 002 737

(73) Patentinhaber : Veitscher Magnesitwerke-Actien-Gesellschaft
Schubertring 10-12
A-1010 Wien (AT)

(72) Erfinder : Gulas, Hans-Jürgen, Dr., Dipl.-Ing.
Magnesitstrasse 6
A-8707 Leoben (AT)
Erfinder : Petio, Franz Adolf, Dr.
Angerweg 32
A-8650 Kindberg (AT)

(74) Vertreter : Kliment, Peter, Dipl.-Ing. Mag.-jur. et al
Singerstrasse 8
A-1010 Wien (AT)

**Beschreibung**

Die Erfindung betrifft ein Verfahren zur Herstellung von feuerfesten Magnesiachromerzeugnissen durch Bereiten einer Mischung aus einer eine Korngröße von unter 0,2 mm, vorzugsweise höchstens 0,12 mm, aufweisenden kaustisch gebrannten Magnesia und aus feinkörnigem, einen FeO-Gehalt von 20 bis 28 Gew.-% aufweisendem Chromerz in einem Verhältnis, welches einen $Cr_2O_3$-Gehalt von 10 bis 30 Gew.-%, vorzugsweise 15 bis 25 Gew.-%, und ein $Cr_2O_3/Al_2O_3$-Gewichtsverhältnis von über 2,5, vorzugsweise über 3, in der Mischung ergibt, durch Verformen der Mischung zu Briketts oder Formkörpern und Brennen derselben bei Temperaturen von mindestens 2 000 °C, vorzugsweise mindestens 2 100 °C, jedoch ohne Niederschmelzen, und Weiterverarbeiten des erhaltenen Magnesiachrom-Sintermaterials zu bei Temperaturen von etwa 1 800 °C und darüber gebrannten Steinen sowie zu ungebrannten Steinen oder feuerfesten Massen.

Zur Herstellung von vorreagierten Magnesiachrom-Sintermaterialien durch einen gemeinsamen Hochtemperatur-Sinterbrand von Magnesia lieferndem Material und Chromerz, wobei das eingesetzte Chromerz während des Sinterbrandes durch eine im wesentlichen im festen Zustand verlaufende Reaktion in der Periklasgrundmasse aufgelöst wird und nach dem Abkühlen in dieser in Form neu gebildeter Spinellausscheidungen enthalten ist, so daß Restbestandteile der ursprünglichen Chromerzkörner, falls überhaupt, nur in einem Ausmaß von höchstens 10 Vol.-% oder besser höchstens 5 Vol.-% vorliegen, sowie zur Herstellung feuerfester Erzeugnisse aus solchen Sintermaterialien sind bereits mehrere Verfahren bekannt.

Nach dem in der AT-B-301 433 beschriebenen Verfahren wird das Chromerz in grobkörniger Form mit einem geringen Anteil (höchstens 20 Gew.-%) unter 0,1 mm und einem hohen Anteil (mindestens 40 Gew.-%) über 1 mm und als Magnesia lieferndes Material ein feinkörniger Rohmagnesit unter 0,1 mm eingesetzt, wobei Höchstgrenzen für die zulässigen $SiO_2$- und CaO-Gehalte vorgeschrieben sind. Der Einsatz von grobkörnigem Chromerz ist dabei erforderlich, um ein dichtes Sintermaterial zu erhalten. Mit feinkörnigem Chromerz und Rohmagnesit werden nur ungünstige Porositätswerte beim Sinterkorn erreicht. Grobkörnige Chromerze in der erforderlichen Reinheit sind jedoch nicht leicht zu beschaffen, da die natürlichen Vorkommen dafür nur beschränkt sind.

Leichter erhältlich sind sogenannte Chromerzkonzentrate, das sind Chromerze, deren $SiO_2$- und CaO-Gehalte durch einen Aufbereitungsvorgang herabgesetzt sind, was allerdings mit sich bringt, daß diese Konzentrate nur in feinkörniger Form vorliegen.

Nach dem Verfahren der AT-B-290 374 wird aus einem solchen Konzentrat, nämlich aus Chromerz, das zu 20 bis 80 Gew.-% eine Korngröße von unter 0,12 mm hat, und einem feinkörnigen Magnesiaträger, der einen MgO-Gehalt, bezogen auf den gebrannten Zustand, von weniger als 95 Gew.-% MgO aufweist und gegebenenfalls Magnesitflugstaub enthält, bei Temperaturen von mindestens 1 750 °C, beispielsweise von 2 000 °C und darüber, ein Sintermaterial gebrannt, das einen $SiO_2$-Gehalt von höchstens 2,5 Gew.-%, einen CaO-Gehalt von höchstens 4 Gew.-% und ein molares Kalk-Kieselsäure-Verhältnis von über 0,6 bis 2,5 aufweist. Die aus diesem Sintermaterial hergestellten Steine können jedoch nur bei relativ niedrigen Temperaturen von z. B. 1 560 bis 1 580 °C gebrannt werden, was ihre Anwendung auf entsprechende, relativ niedrige Betriebstemperaturen beschränkt, und können mit ihren Feuerfesteigenschaften höchsten Ansprüchen nicht genügen.

Ein Qualitätsmerkmal des Chromerzes ist auch sein Eisengehalt, wobei zur Ermittlung dieses Wertes davon ausgegangen wird, daß das gesamte im Chromerz enthaltene Eisen als FeO vorliegt. Die eisenärmeren Chromerztypen mit FeO-Gehalten von z. B. etwa 15 Gew.-% gelten dabei als die höherwertigen, während die eisenreicheren Konzentrate mit FeO-Gehalten von beispielsweise 18 bis 27 Gew.-% günstiger erhältlich sind.

Nach dem Verfahren der AT-B-336 478 kann aus einem derartigen eisenreichen Chromerzkonzentrat feiner bis mittelfeiner Körnung von 0,1 bis 1,5 mm und einer kaustischen Magnesia, die gleichfalls in minderwertiger Form, nämlich als Magnesitflugstaub, vorliegen kann, ein Sintermaterial mit einem $Fe_2O_3$-Gehalt von 11 bis 20 Gew.-% gebrannt werden. Die aus diesem Sintermaterial geformten Steine werden bei einer Brenntemperatur von ungefähr 1 800 °C, knapp unterhalb des Erweichungsintervalls des Sintermaterials, gebrannt und weisen eine hohe Pyroplastizität und gute Heißfestigkeit auf, was sie für Anwendungstemperaturen über 1 600 °C, jedoch unterhalb von 1 800 °C, geeignet macht, da die Steine in diesem Temperaturbereich einem abplatzungsfreien, kontinuierlichen Verschleiß unterliegen. Für höhere Anwendungstemperaturen oder besonders hohe Heißbeanspruchungen sind diese Steine jedoch nicht geeignet.

In der DE-A-1 571 638 wird die direkte Herstellung fertiger feuerfester Steine aus einer granulierten Mischung von Magnesia und Chromerz beschrieben, wobei die aus der Mischung geformten Steine bei sehr hoher Temperatur im Bereich von 1 930 bis 2 095 °C gebrannt werden. Dabei wird auch die Möglichkeit eines Zweistufenverfahrens in Betracht gezogen, wonach aus der Mischung zunächst ein hochgebranntes Zwischenprodukt hergestellt und dieses nach Zerkleinern und Klassieren zu Steinen verarbeitet wird. Die Körnungsangaben beziehen sich nur auf die Summen-Korngrößenverteilung der Mischung bei der direkten Steinherstellung ; die Körnungen der einzelnen Komponenten sind daraus nicht herleitbar. Beispielsweise enthält die als Ausgangsmaterial eingesetzte Magnesia 0,6 Gew.-% $SiO_2$ ; ein derart hoher Betrag an dieser Verunreinigung ist jedoch ungünstig.

Nach der GB-A-2 002 737 wird ein kompaktes Feuerfestmaterial durch Kaustischbrennen einer Mischung aus MgO oder einer beim Brennen MgO liefernden Verbindung und Chromerz, oder durch zuerst Kaustischbrennen des MgO oder der Mg-Verbindung und dann Bilden der Mischung mit dem Chromerz, und anschließendes Formen und Sintern der Mischung hergestellt. Dabei wird die Mischung auf extreme Feinheit mit einer durchschnittlichen Teilchengröße unter 0,05 mm gebracht. Beispielsweise wird ein eisenarmes Chromerz eingesetzt, das — wie oben erwähnt — ein kostspieliges Ausgangsmaterial darstellt.

Es ist Aufgabe der Erfindung, unter Einsatz eines feinkörnigen, eisenreichen — und daher als relativ minderwertig geltenden — Chromerzes ein Magnesiachrom-Sintermaterial und daraus feuerfeste Erzeugnisse herzustellen, die sehr hohen Feuerfestbeanspruchungen genügen.

Es wurde nun gefunden, daß die Lösung dieser Aufgabe durch den Einsatz einer kaustischen Magnesia mit hohem MgO-Gehalt und geringen Gehalten an Begleitelementen gelingt, wenn an den $SiO_2$-Gehalt des Chromerzes und an den CaO- und $SiO_2$-Gehalt des Sintermaterials bestimmte einschränkende Bedingungen gestellt werden, wobei insbesondere auch auf einen niedrigen Borgehalt der Magnesia geachtet werden muß. In den vorgenannten Veröffentlichungen wird dagegen dem Borgehalt der Magnesia keine Beachtung geschenkt.

Die Erfindung ist bei einem Verfahren der eingangs genannten Art dadurch gekennzeichnet, daß die kaustische Magnesia mit einem MgO-Gehalt von über 97 Gew.-%, einem $SiO_2$-Gehalt von höchstens 0,2 Gew.-%, einem $Fe_2O_3 + Al_2O_3$-Gehalt von höchstens 0,7 Gew.-%, vorzugsweise höchstens 0,3 Gew.-% einem CaO-Gehalt von höchstens 2 Gew.-% und einem $B_2O_3$-Gehalt von höchstens 0,06 Gew.-% und das Chromerz in einer Körnung von 0 bis 1,5 mm mit einem $SiO_2$-Gehalt von höchstens 1,5 Gew.-%, vorzugsweise höchstens 1,0 Gew.-%, und einem CaO-Gehalt von höchstens 0,2 Gew.-% in einem Verhältnis eingesetzt werden, welches einen CaO-Gehalt von höchstens 1,1 Gew.-% und einen $SiO_2$-Gehalt von höchstens 0,7 Gew.-%, jedoch einen Summengehalt $CaO + SiO_2$ von höchstens 1,3 Gew.-% in der Mischung ergibt.

Durch den Einsatz des Magnesiaträgers in Form der angegebenen MgO-reichen kaustischen Magnesia mit nur geringen Verunreinigungen an $SiO_2$, $Fe_2O_3$, $Al_2O_3$, CaO und $B_2O_3$ tritt eine bedeutende Erhöhung der Feuerfestigkeit des Sintermaterials und der daraus erzeugten Produkte ein. Der hohe FeO-Gehalt des Chromerzes hat dabei keinen nachteiligen Einfluß auf die Heißfestigkeit, wenn sein $SiO_2$-Gehalt nicht höher als 1,5 Gew.-%, vorzugsweise nicht höher als 1,0 Gew.-%, ist und die Mischung aus kaustischer Magnesia und Chromerz bzw. das daraus erhaltene Sintermaterial auf die genannten geringen CaO- und $SiO_2$-Werte sowie auf ein $Cr_2O_3/Al_2O_3$-Gewichtsverhältnis von über 2,5, vorzugsweise über 3, eingestellt wird. In diesem Sinne empfiehlt es sich auch, wenn die Mischung bzw. das Sintermaterial gemäß einer Ausgestaltung der Erfindung auf ein $Cr_2O_3/Fe_2O_3$-Gewichtsverhältnis von 1,6 bis 3 eingestellt wird.

Nach der Erfindung wird der Einsatz von Chromerzen ermöglicht, welche einen hohen FeO-Gehalt von 20 bis 28 Gew.-% aufweisen. Diese zwecks Aufbereitung, hauptsächlich zur Verminderung des $SiO_2$-Gehaltes, zerkleinerten Chromerze weisen eine Korngröße von 0 bis 1,5 mm auf. Sie können für die Zwecke der Erfindung mit Vorteil auch in einer Körnung eingesetzt werden, bei der mindestens 60 Gew.-% des Chromerzes kleiner als 0,7 mm sind.

Bei bekannten Verfahren zur Herstellung von Magnesiachrom-Sintermaterialien hat man relativ $SiO_2$-reiche Chromerze verwendet, weshalb der $SiO_2$-Gehalt der Magnesiakomponente nur von geringem Einfluß auf die Eigenschaften des Endproduktes war. Beim erfindungsgemäßen Verfahren wird der sehr niedrige $SiO_2$-Gehalt von maximal 0,2 Gew.-% in der Ausgangsmagnesia bewußt eingehalten, damit der $SiO_2$-Gehalt des Sintermaterials praktisch nur durch die Menge des eingesetzten Chromerzes festgelegt wird. Das bedeutet : je höher der $Cr_2O_3$-Gehalt im Endprodukt ist, desto mehr $SiO_2$ wird darin vorliegen. Bei einem höheren $Cr_2O_3$-Gehalt verträgt aber das Produkt, nach den Erkenntnissen der Erfinder, einen höheren $SiO_2$-Gehalt ohne nachteilige Folgen.

Der Borgehalt wurde bisher nur bei Sintermagnesia und Magnesiaerzeugnissen als schädlich angesehen. Bei Magnesiachromprodukten wurde dagegen dem $B_2O_3$-Gehalt keine Beachtung geschenkt, weil bei deren höherem $CaO + SiO_2$-Gehalt der Borgehalt ohne wesentlichen Einfluß auf die Feuerfesteigenschaften ist. Erst die Erfinder haben erkannt, daß der geringe $CaO + SiO_2$-Gehalt der nach der Erfindung hergestellten Produkte nur dann in vorteilhafter Weise wirksam wird, wenn der Borgehalt der Magnesia auf maximal 0,06 Gew.-% $B_2O_3$ beschränkt wird.

Die nach der Erfindung vorgesehene kaustische Magnesia kann synthetisch, etwa durch thermische Zersetzung einer gereinigten Magnesiumchloridsole gewonnen sein ; es kann aber auch eine aus Seewasser gewonnene kaustische Magnesia verwendet werden. Während im erstgenannten Fall der synthetischen Magnesia der $B_2O_3$-Gehalt nur wenige Tausendstel Gew.-% beträgt und daher kein Problem darstellt, besitzt die Seewassermagnesia aufgrund ihres Herstellungsverfahrens höhere $B_2O_3$-Gehalte, welche die Feuerfesteigenschaften nachteilig beeinflussen können. Gute Seewassermagnesiasorten haben $B_2O_3$-Gehalte etwa von 0,03 bis 0,05 Gew.-% ; sie können für die Zwecke der Erfindung eingesetzt werden. Magnesiasorten mit mehr als 0,06 Gew.-% $B_2O_3$ sind dagegen für den Einsatz beim erfindungsgemäßen Verfahren nicht geeignet.

Beim Mischen der Ausgangsmaterialien, kaustische Magnesia und Chromerz, wird zweckmäßig ein übliches Bindemittel zugesetzt, z. B. eine Magnesiumsulfatlösung, die aus Kieserit oder aus Bittersalz hergestellt werden kann. Die Mischung wird dann auf einer Brikettpresse, z. B. Walzenpresse, zu Briketts geformt, wobei es vorteilhaft ist, möglichst hohe, auf solchen Pressen erreichbare Drücke anzuwenden, z. B. solche in der Größenordnung von 14 bis 20 N/mm². Es ist aber auch eine andere Kompaktierung der Mischung möglich. Die Briketts oder Formkörper werden getrocknet und anschließend dem Sinterbrand unterworfen. Dieser erfolgt bei einer Temperatur von mindestens 2 000 °C, vorzugsweise mindestens 2 100 °C, welche durch Anwendung von gasförmigem Sauerstoff zu erreichen ist. Als Brennofen dient zweckmäßig ein Schachtofen, u. zw. vorzugsweise ein solcher mit mindestens zwei übereinanderliegenden Brennzonen, wobei Sauerstoffgas mindestens in der unteren Brennzone zugeführt wird, doch kann auch ein Drehrohrofen verwendet werden, soferne darin die geforderten hohen Temperaturen erreicht werden.

Beim angegebenen Sinterbrand kommt es zu einer Auflösung des eingesetzten Chromerzes in der Periklasgrundmasse, wobei dieser Vorgang praktisch im festen Zustand erfolgt, da, abgesehen vom Auftreten gewisser, von Verunreinigungen der Chromerzgangart herrührender Schmelzphasen in untergeordneter Menge, ein Niederschmelzen des Materials weder erforderlich noch erwünscht ist. Beim Abkühlen des Sintermaterials scheiden sich die Chromerzbestandteile praktisch vollständig als neu gebildete Spinelle in der Magnesiagrundmasse aus. Das Gefüge des Sintermaterials kommt dem eines Schmelzkornmaterials nahe, ohne daß jedoch zu seiner Herstellung ein aufwendiger Schmelzprozeß nötig wäre. Restbestandteile ursprünglicher Chromerzkörner sollen, wenn überhaupt, nur in einem Ausmaß von höchstens 10 Vol.-%, vorzugsweise höchstens 5 Vol.-%, vorhanden sein.

Das beim erfindungsgemäßen Verfahren als Zwischenprodukt anfallende Sintermaterial zeichnet sich durch eine niedrige offene Kornporosität von durchschnittlich etwa 7 Vol.-% aus, gemessen an der Körnung 3 bis 4 mm, wobei das Kornvolumen einschließlich aller Poren durch die Quecksilberaufnahme in einem Vakuumpyknometer mit einem Andruck (Ausgangsdruck) von etwa 265 mbar gemäß DIN 51 065, Teil 2, und das Kornfestvolumen einschließlich der geschlossenen Poren durch ein Luftvergleichspyknometer bestimmt wird. Dieses Meßverfahren gilt auch für die in den Ausführungsbeispielen und Vergleichsversuchen angegebenen Werte der offenen Sinterkornporosität.

Die Steine nach der Erfindung können ohne Schädigung bei Temperaturen bis zu 2 000 °C und sogar darüber gebrannt werden und zeichnen sich durch eine sehr hohe Heißfestigkeit aus. So liegen die Werte der bei 1 600 °C gemessenen Heißdruckfestigkeit der erfindungsgemäßen gebrannten Steine bei 15 N/mm² und höher.

Zur weiteren Erläuterung der Erfindung dienen die folgenden Ausführungsbeispiele und Vergleichsversuche.

## Beispiel 1

57 Gew.-% kaustische Magnesia A in der Körnung 0 bis 0,1 mm und 43 Gew.-% Chromerzkonzentrat (Chromerz A) in der Körnung 0 bis 1,5 mm, wovon 90 Gew.-% kleiner als 0,7 mm waren, wurden unter Zusatz einer Magnesiumsulfatlösung gemischt, zu Briketts gepreßt, diese wurden getrocknet und bei 2 100 °C in einem Schachtofen zu einem Magnesiachrom-Sintermaterial A gebrannt. Die Zusammensetzung der Ausgangsmaterialien und des erhaltenen Sintermaterials war wie folgt :

|  | Kaustische Magnesia A | Chromerz A | Sintermaterial A |
|---|---|---|---|
| $SiO_2$ | 0,01 Gew.-% | 0,91 Gew.-% | 0,45 Gew.-% |
| FeO | - | 25,93 " | - |
| $Fe_2O_3$ | 0,02 " | - | 12,20 " |
| $Al_2O_3$ | 0,02 " | 14,90 " | 6,50 " |
| $Cr_2O_3$ | - | 47,03 " | 20,10 " |
| CaO | 1,35 " | 0,07 " | 0,77 " |
| MgO | 98,60 " | 10,90 " | 59,90 " |

Das Sintermaterial A wies folgende Eigenschaften auf :

| | |
|---|---|
| $CaO + SiO_2$ | 1,22 Gew.-% |
| $CaO/SiO_2$ | 1,71 Gew.-% |
| $Cr_2O_3/Fe_2O_3$ | 1,65 Gew.-% |
| Kornrohdichte | 3,60 g/cm³ |
| Sinterkornporosität, offen | 6,1 Vol.-% |

4

Aus diesem Sintermaterial A wurde eine Steinmischung nach folgendem Rezept hergestellt :

| | |
|---|---|
| 3,0-5,0 mm | 20 Gew.-% |
| 1,0-3,0 mm | 45 Gew.-% |
| 0,1-1,0 mm | 10 Gew.-% |
| 0-0,1 mm | 25 Gew.-% |

Diese Mischung wurde mit 3,7 Gew.-% Magnesiumsulfatlösung versetzt, unter einem Druck von 110 N/mm² zu Steinen gepreßt, diese wurden getrocknet und sodann bei 1 800 °C 4 Stunden (Aufheiz- und Abkühlzeit nicht eingerechnet) gebrannt. Die erhaltenen Steine A wiesen folgende Eigenschaften auf :

| | |
|---|---|
| Steinrohdichte | 3,20 g/cm³ |
| Steinporosität, offen | 17,3 Vol.-% |
| Druckfestigkeit bei Raumtemperatur | 55,4 N/mm² |
| Druckfestigkeit bei 1 600 °C | 23,9 N/mm² |

Zu Vergleichszwecken wurde in der gleichen Weise, jedoch unter Verwendung eines eisenarmen, und demnach entsprechend höherwertigen Chromerzkonzentrats (Chromerz B) in der Körnung von 0 bis 1,5 mm, wovon 80 Gew.-% kleiner als 0,7 waren, ein Sintermaterial B hergestellt. Als Magnesiakomponente kam wieder die kaustische Magnesia A zum Einsatz. Das Chromerz B und das erhaltene Magnesiachrom-Sintermaterial B hatten folgende Zusammensetzung :

| | Chromerz B | Sintermaterial B |
|---|---|---|
| $SiO_2$ | 0,36 Gew.-% | 0,30 Gew.-% |
| FeO | 15,00 " | – |
| $Fe_2O_3$ | – | 5,75 " |
| $Al_2O_3$ | 11,70 " | 4,17 " |
| $Cr_2O_3$ | 57,70 " | 20,47 " |
| CaO | 0,15 " | 0,83 " |
| MgO | 14,90 " | 68,40 " |

Aus diesem Sintermaterial B wurden unter desselben Bedingungen wie oben gebrannte Steine B hergestellt. Es ergaben sich folgende Eigenschaftswerte :

| | |
|---|---|
| Kornrohdichte | 3,61 g/cm³ |
| Sinterkornporosität, offen | 6,1 Vol.-% |
| Steinrohdichte | 3,20 g/cm³ |
| Steinporosität, offen | 17,5 Vol.-% |
| Druckfestigkeit bei Raumtemperatur | 45,5 N/mm² |
| Druckfestigkeit bei 1 600 °C | 23,3 N/mm² |

Der Vergleich zeigt, daß die erfindungsgemäßen Steine A den aus dem teueren, hochwertigen Chromerz B hergestellten Vergleichssteinen B in den Eigenschaften gleichkommen, ja sie sogar hinsichtlich der Festigkeitswerte geringfügig übertreffen.

## Beispiel 2

Unter Einsatz der kaustischen Magnesia A und in der gleichen Weise wie im Beispiel 1 wurden Sintermaterialien und daraus gebrannte Steine hergestellt, wobei Chromerze, mit verschiedenen $SiO_2$-Gehalten zur Anwendung kamen. Aus dem den erfindungsgemäßen Bedingungen genügenden Chromerz C wurde das Sintermaterial C und daraus die erfindungsgemäßen Steine C hergestellt. Unter Einsatz des einen höheren $SiO_2$-Gehalt aufweisenden Chromerzes D erhielt man das Sintermaterial D und daraus die Vergleichssteine D. Die Chromerze und die erhaltenen Sintermaterialien C und D waren wie folgt zusammengesetzt :

5

| | Chromerz C | Sintermaterial C | Chromerz D | Sintermaterial D |
|---|---|---|---|---|
| $SiO_2$ | 0,41 Gew.-% | 0,30 Gew.-% | 1,52 Gew.-% | 0,66 Gew.-% |
| FeO | 25,51 " | - | 23,63 " | - |
| $Fe_2O_3$ | - | 12,07 " | - | 11,90 " |
| $Al_2O_3$ | 15,77 " | 6,33 " | 14,22 " | 6,63 " |
| $Cr_2O_3$ | 46,89 " | 19,60 " | 46,00 " | 19,95 " |
| CaO | 0,11 " | 0,73 " | 0,06 " | 0,74 " |
| MgO | 10,21 " | 60,90 " | 14,40 " | 60,10 " |

Die Sintermaterialien bzw. die Steine C und D wiesen folgende Eigenschaften auf :

| | Sintermaterial C | Sintermaterial D |
|---|---|---|
| $CaO + SiO_2$ | 1,03 Gew.-% | 1,40 Gew.-% |
| $CaO/SiO_2$ | 2,43 | 1,12 |
| $Cr_2O_3/Fe_2O_3$ | 1,62 | 1,68 |
| Kornrohdichte | 3,62 g/cm$^3$ | 3,66 g/cm$^3$ |
| Sinterkornporosität, offen | 7,6 Vol.-% | 7,1 Vol.-% |

| | Steine C | Steine D |
|---|---|---|
| Steinrohdichte | 3,18 g/cm$^3$ | 3,19 g/cm$^3$ |
| Steinporosität, offen | 18,4 Vol.-% | 18,1 Vol.-% |
| Druckfestigkeit bei Raumtemperatur | 59,0 N/mm$^2$ | 60,8 N/mm$^2$ |
| Druckfestigkeit bei 1600°C | 20,9 N/mm$^2$ | 14,4 N/mm$^2$ |

Es zeigt sich, daß die Vergleichsqualität D mit dem $CaO + SiO_2$-Gehalt von über 1,3 Gew.-% eine um über 30 % niedrigere Heißfestigkeit der gebrannten Steine aufweist als die erfindungsgemäße Qualität C.

Beispiel 3

Das erfindungsgemäße Sintermaterial bzw. die daraus erzeugten Steine C gemäß Beispiel 2 wurden in Vergleich gesetzt zu einem Sintermaterial bzw. zu Steinen E, die unter Einsatz einer kaustischen Magnesia E mit erhöhtem, außerhalb der Erfindung liegenden $Fe_2O_3$-Gehalt hergestellt wurden. Es kam ein den erfindungsgemäßen Bedingungen genügendes Chromerz E in der Körnung 0 bis 1,5 mm, wovon 80 Gew.-% kleiner als 0,7 mm waren, zum Einsatz. Die kaustische Magnesia E und das Chromerz E wurden im Gewichtsverhältnis 62 : 38 mit einer Magnesiumsulfatlösung als Bindemittel gemischt, brikettiert, getrocknet und in einem Schachtofen unter Zusatz von gasförmigem Sauerstoff bei etwa 2 100 °C zu einem Sintermaterial E gebrannt. Die genannten Stoffe hatten folgende Zusammensetzung :

| | Kaustische Magnesia E | Chromerz E | Sintermaterial E |
|---|---|---|---|
| $SiO_2$ | 0,19 Gew.-% | 1,32 Gew.-% | 0,68 Gew.-% |
| FeO | - | 23,79 " | - |
| $Fe_2O_3$ | 3,22 " | - | 13,05 " |
| $Al_2O_3$ | 0,43 " | 14,23 " | 6,36 " |
| $Cr_2O_3$ | - | 47,15 " | 20,27 " |
| CaO | 1,05 " | 0,14 " | 0,66 " |
| MgO | 95,11 " | 13,37 " | 58,94 " |
| $CaO + SiO_2$ | | | 1,34 " |
| $Cr_2O_3/Fe_2O_3$ | | | 1,54 |

0 091 704

Aus dem erfindungsgemäßen Sintermaterial C (Beispiel 2) und dem Vergleichssintermaterial E wurden Steine C bzw. E in der in Beispiel 1 angegebenen Weise hergestellt, jedoch wurden jeweils Teilmengen dieser Steine bei verschiedenen Brenntemperaturen gebrannt. An den erhaltenen Steinen wurde die Druckfestigkeit (DF) bei 1 600 °C wie folgt gemessen :

| Steinbrenntemperatur | $1700^{\circ}$C | $1800^{\circ}$C | $1900^{\circ}$C | $2000^{\circ}$C |
|---|---|---|---|---|
| Steine C  DF bei 1600$^{\circ}$C  N/mm$^2$ | 10,4 | 20,9 | 26,4 | 33,8 |
| Steine E  DF bei 1600$^{\circ}$C  N/mm$^2$ | 4,8 | 10,5 | x) | x) |

x) nicht meßbar, da Steine nicht erzeugbar (stark deformiert und rissig)

Es ist ersichtlich, daß aus dem erfindungsgemäßen Sintermaterial C Steine auch noch mit der sehr hohen Steinbrenntemperatur von 2 000 °C einwandfrei gebrannt werden können. Aus dem außerhalb der Erfindung liegenden Sintermaterial E können dagegen Steine nur bis zu einer Steinbrenntemperatur von etwa 1 800 °C gebrannt werden. Diese Steine E weisen außerdem wesentlich geringere Heißfestigkeit auf als die entsprechenden erfindungsgemäßen Steine C.

**Patentansprüche**

1. Verfahren zur Herstellung von feuerfesten Magnesiachromerzeugnissen durch Bereiten einer Mischung aus einer eine Korngröße von unter 0,2 mm, vorzugsweise höchstens 0,12 mm, aufweisenden kaustisch gebrannten Magnesia und aus feinkörnigem, einen FeO-Gehalt von 20 bis 28 Gew.-% aufweisendem Chromerz in einem Verhältnis, welches einen $Cr_2O_3$-Gehalt von 10 bis 30 Gew.-%, vorzugsweise 15 bis 25 Gew.-%, und ein $Cr_2O_3/Al_2O_3$-Gewichtsverhältnis von über 2,5, vorzugsweise über 3, in der Mischung ergibt, durch Verformen der Mischung zu Briketts oder Formkörpern und Brennen derselben bei Temperaturen von mindestens 2 000 °C, vorzugsweise mindestens 2 100 °C, jedoch ohne Niederschmelzen, und Weiterverarbeiten des erhaltenen Magnesiachrom-Sintermaterials zu bei Temperaturen von etwa 1 800 °C und darüber gebrannten Steinen sowie zu ungebrannten Steinen oder feuerfesten Massen, dadurch gekennzeichnet, daß die kaustische Magnesia mit einem MgO-Gehalt von über 97 Gew.-%, einem $SiO_2$-Gehalt von höchstens 0,2 Gew.-%, einem $Fe_2O_3$ + $Al_2O_3$-Gehalt von höchstens 0,7 Gew.-%, vorzugsweise höchstens 0,3 Gew.-%, einem CaO-Gehalt von höchstens 2 Gew.-% und einem $B_2O_3$-Gehalt von höchstens 0,06 Gew.-% und das Chromerz in einer Körnung von 0 bis 1,5 mm mit einem $SiO_2$-Gehalt von höchstens 1,5 Gew.-%, vorzugsweise höchstens 1,0 Gew.-%, und einem CaO-Gehalt von höchstens 0,2 Gew.-% in einem Verhältnis eingesetzt werden, welches einen CaO-Gehalt von höchstens 1,1 Gew.-% und einen $SiO_2$-Gehalt von höchstens 0,7 Gew.-%, jedoch einen Summengehalt CaO + $SiO_2$ von höchstens 1,3 Gew.-% in der Mischung ergibt.

2. Verfahren nach Anspruch 1, dadurch gekennzeichnet, daß das Chromerz in einer Körnung eingesetzt wird, bei der mindestens 60 Gew.-% des Chromerzes kleiner als 0,7 mm sind.

3. Verfahren nach Anspruch 1 oder 2, dadurch gekennzeichnet, daß die Mischung auf ein $Cr_2O_3/Fe_2O_3$-Gewichtsverhältnis von 1,6 bis 3 eingestellt wird.

**Claims**

1. Method of manufacturing magnesia-chromium refractory products by preparing a mixture of a caustically burned magnesia having a grain size of less than 0.2 mm, preferably at most 0.12 mm, and of fine grained chromium ore having a FeO content of 20 to 28 % by weight, in a ratio producing in the mixture a $Cr_2O_3$ content of 10 to 30 % by weight, preferably 15 to 25 % by weight, and a $Cr_2O_3/Al_2O_3$ weight ratio of more than 2.5, preferably more than 3, shaping the mixture into briquettes or shaped bodies and sintering the same at temperatures of at least 2 000 °C, preferably at least 2 100 °C, but without melting down, and further treating the resultant magnesia-chromium sinter material to obtain burned bricks by burning at temperatures of about 1 800 °C or above as well as unburned bricks or refractory masses, characterized in that the caustic magnesia having a weight content of more than 97 % MgO, at most 0.2 % $SiO_2$, at most 0.7 % $Fe_2O_3$ + $Al_2O_3$, preferably at most 0.3 % $Fe_2O_3$ + $Al_2O_3$, at most 2 % CaO, and at most 0.06 % $B_2O_3$ and the chromium ore having a grain size up to 1.5 mm and a weight content of at most 1.5 % $SiO_2$, preferably at most 1.0 % $SiO_2$, and at most 0.2 % CaO are used in such a ratio producing in the mixture a weight content of at most 1.1 % CaO and at most 0.7 % $SiO_2$, the sum of the weight content of CaO + $SiO_2$, however, not exceeding 1.3 %.

2. Method according to claim 1, characterized in that the chromium ore is used in a grain size wherein at least 60 % by weight of the chromium ore is smaller than 0.7 mm.

3. Method according to claim 1 or 2, characterized in that the mixture is adjusted to a $Cr_2O_3/Fe_2O_3$ weight ratio of 1.6 to 3.

7

**Revendications**

1. Procédé de fabrication des produits réfractaires de magnésie-chrome, par préparation d'un mélange d'une magnésie caustique calcinée, présentant une granulométrie inférieure à 0,2 mm, de préférence au maximum égale à 0,12 mm, et d'un minerai de chrome en grains fins présentant une teneur en FeO de 20 à 28 % en poids, selon un rapport qui donne dans le mélange une teneur en $Cr_2O_3$ de 10 à 30 % en poids, avantageusement 15 à 25 % en poids, et un rapport pondéral $Cr_2O_3/Al_2O_3$ supérieur à 2,5, avantageusement supérieur à 3, par moulage du mélange en des briquettes ou en des objets moulés et leur calcination à des températures d'au moins 2 000 °C, avantageusement au moins 2 100 °C, mais sans fusion, et poursuite de la transformation de la matière frittée en magnésie-chrome obtenue pour obtenir des briques cuites à des températures d'environ 1 800 °C et au-delà ainsi que des briques non cuites ou des pisés réfractaires, procédé caractérisé en ce qu'on utilise la magnésie caustique ayant une teneur en MgO supérieure à 97 % en poids, une teneur en $SiO_2$ de 0,2 % en poids au maximum, une teneur en $Fe_2O_3 + Al_2O_3$ de 0,7 % en poids au maximum, avantageusement de 0,3 % en poids au maximum, une teneur en CaO de 2 % en poids au maximum et une teneur en $B_2O_3$ de 0,06 % en poids au maximum, et le minerai de chrome en une granulométrie de 0 à 1,5 mm avec une teneur en $SiO_2$ de 1,5 % en poids au maximum, avantageusement de 1,0 % en poids au maximum, et une teneur en CaO de 0,2 % en poids au maximum, selon un rapport donnant dans le mélange une teneur en CaO de 1,1 % en poids au maximum et une teneur en $SiO_2$ de 0,7 % en poids au maximum, mais une teneur totale en CaO + $SiO_2$ de 1,3 % en poids au maximum.

2. Procédé selon la revendication 1, caractérisé en ce qu'on utilise le minerai de chrome en une granulométrie dans laquelle au moins 60 % en poids du minerai de chrome ont moins de 0,7 mm.

3. Procédé selon la revendication 1 ou 2, caractérisé en ce qu'on ajuste le mélange à un rapport pondéral $Cr_2O_3/Fe_2O_3$ compris entre 1,6 et 3.